# EUROPEAN PATENT SPECIFICATION

(11) **EP 2 793 549 B1**
(45) Date of publication and mention of the grant of the patent: **13.01.2016**
(21) Application number: 11826115.5
(22) Date of filing: 20.12.2011
(51) Int. Cl.: A01G 3/025

(54) **LOPPER HEAD AND LOPPER**
BAUMSCHERENKOPF UND BAUMSCHERE
TÊTE D'ÉBRANCHEUR ET ÉBRANCHEUR

(43) Date of publication of application: 29.10.2014
(73) Proprietor: HUSQVARNA AB, 561 82 Huskvarna (SE)
(72) Inventor: KOHL, Peter, 89257 Illertissen (DE)
(74) Representative: Finkele, Rolf
(86) International application number: PCT/EP2011/073388
(87) International publication number: WO 2013/091681

(56) References cited:
- EP-A1- 1 891 853
- EP-A1- 2 319 295
- GB-B- 2 471 774

## Description

The invention is related to lopper head and a lopper.

Loppers, in particular tree loppers, generally comprise a lopper head, comprising cutting blades for cutting branches and the like. The lopper head in general is attached to an end of an elongated stick and operable via mechanic elements from a remote end of the elongated stick.

One major issue with such loppers is to provide good and easy remote operability of the lopper head. Many different approaches for providing remote controlled loppers have been proposed. In this connection, reference is in particular made to GB 2 471 774 B, EP 1 891 853 A1 and DE 949 784.

Despite all proposed lopper devices, there is still room for enhancing operability, in particular remote operability of lopper devices and lopper heads as set out beforehand.

Therefore, it is an object of the invention to provide a lopper head and corresponding lopper allowing easy and alleviated remote operation and easy mechanical handling.

This object is solved in particular by claims 1 and 9. Preferred embodiments result from respective dependent claims.

According to claim 1, a lopper head is proposed, comprising a connector section adapted and designed for connecting the lopper head to an elongated stick, i. e. lopper stick, or handle.

The connector section may be any of a male or female type adapter designed for connecting, in particular plug connecting, a corresponding female or male fitting, in particular end section, of a respective stick. The connector section may for example be a hollow shaft or element of similar design.

A stick in particular shall mean a rod having sufficient stiffness and bending resistance to operate and handle a lopper head attached to a remote end of the rod. The stick or rod may have several meters in length. The cross section of the stick may be of circular, oval, rectangular, rounded rectangular or other geometry. Preferably, the stick is a telescopic or multiple telescopic stick or handle.

The lopper head further comprises a pivot bearing having a first bearing element attached to the connector section and having a second bearing element pivotably attached to the fist bearing element and carrying cutting blades. The term "carrying cutting elements" shall mean, that the cutting elements are attached to the second bearing element, where in particular screws, rivets, hot-caulking and others may be used.

The cutting blades are designed for cutting branches and limbs of trees and bushes and the like. The cutting blades preferably are implemented as scissor-type cutting blades which in particular shall mean that the cutting blades are fixed to each other by a hinge pin such that the blades are rotatable relative to each other. A relative rotational movement in particular can be obtained if one of the blades is a moving blade and the other one of the blades, i. e. a counter blade, is a fixed, stationary blade. In rotating the moving blade towards the fixed blade where a cutting gap between the cutting blades is closed, a cutting action can be obtained between respective cutting edges or faces of the cutting blades.

The bearing elements of the pivot bearing may be implemented as interlocked and interlaced swivel connectors. Mating bearing elements of the pivot bearing in particular may be designed as interlaced cylinders. With interlaced cylinders, an inner cylinder may have a special outer contour adapted and customized to fit a corresponding inner contour of an outer cylinder wrapping the inner cylinder.

According to the proposed lopper head, the pivot bearing is cranked against, i. e. vis-à-vis, a center line of the connector section. This in particular shall mean that a pivoting plane of the pivot bearing, i. e. a plane defined by pivoting movement and arranged between the first and second bearing elements, is slanted with respect to the center line of the connector section. In particular, the pivoting level of the second bearing element is slanted or inclined vis-à-vis the center line of the connector section.

Preferably, the cranked arrangement is such that, with respect to the pivot axis, the pivoting plane, in particular the pivoting level, is offset or spaced from an endpoint or endsection of the connector section, arranged adjacent to the first bearing element.

Providing a cranked pivot bearing greatly enhances operability of the lopper, in particular lopper head. In particular, advantageous operational positions and orientations of the lopper head relative to a stick or rod, to which the lopper head is attached to, can be obtained.

The pivot axis of the pivot bearing preferably is oriented parallel to a cutting plane of the cutting blades. Further, the pivot axis may lie within the cutting plane or be offset thereof.

The term cutting plane in particular shall mean a plane defined by cutting motions, in particular rotating cutting motions of the cutting blades and/or cutting faces. If one of the cutting blades is a fixed blade and a second one is a moving one, i. e. rotatable around a blade axis, the cutting plane may be spanned and defined by rotating movement and orientations of the moving blade or a cutting edge thereof. In particular if the cutting blades are implemented in a scissor type arrangement, the cutting plane may be spanned and defined by the orientation of respective cutting blades in the opened configuration.

In a preferred embodiment, the cutting blades are scissor type cutting blades and a center line or axis of a cutting gap between the cutting blades in the open configuration is slanted vis-à-vis the pivoting plane of the pivot bearing. With scissor type cutting blades two cutting blades may be provided and fixed in a common hinge pin. At least one of the blades, may be adapted and mounted rotatable with respect to the hinge pin. The term cutting gap in particular shall mean a cutting throat established between both cutting blades in the opened configuration.

Providing the cutting blades such that the cutting gap is slanted vis-à-vis the pivoting plane, in particular together with the cranked arrangement of the pivot bearing, may result in advantageous handling properties of the lopper head, or lopper comprising such a lopper head. In addition, the lopper head may be designed in a well-arranged manner supporting visibility of the cutting zone and cutting gap even from remote locations.

As for example, the cutting gap and connector section may face away, under respective specific inclination angles, from the same side of the pivoting plane. In particular in this case, pivoting the cutting blades away from the connector section such that the cutting gap is oriented away from the connector section will result in a slightly U- or V-shaped overall arrangement. Such an arrangement may provide a high level of usability. In turning the blades towards the connector section, in particular such that the connector section and cutting blades are approximately flush with each other, a comparatively compact, in particular folded-up and therefore easy-to-operate configuration of the lopper head can be obtained.

In particular with the configuration as set out before, the cutting blades preferably are arranged, in particular slanted or inclined, such that they can be fully rotated without hitting the connector section or a stick attached thereto. However, it is possible and it may be of advantage for operational handling that some kind of pivoting stops or the like are provided. The pivoting stops may be provided as protrusions implemented with the connector section and/or the stick.

In a further embodiment, the cutting blade fixtures and cutting blade manipulating elements are provided and accommodated in a common housing. The housing preferably comprises two or several component parts attached to each other to fix or hold at least one of the blade fixtures, cutting blades and manipulating elements. The component parts of the housing may be fixed to each other by screws, rivets, hot-caulking and the like.

Providing a housing may lead to a comparatively smooth outer appearance of the lopper head, avoiding gaps and free brackets and the like prone for hooking to short branches, shrubbery and the like during operation of the lopper head. Preferably, only the cutting blades as far as required for adequate cutting branches, protrude out of and lie outside the housing. If necessary, also a swivel or hinge pin, connecting both blades in a mutual rotating manner, can be placed outside the housing.

In connection with the embodiment described above, i. e. in which a common housing is provided, a section of the housing preferably is implemented as the second bearing element. This in particular means that the housing is implemented as a highly integrated part, adopting several functions, in particular a load bearing, a pivot bearing and a protective function.

In a preferred configuration, the bearing element comprises two mutually meshing barrel sleeves. Here, a type of live ring bearing assembly can be implemented providing comparatively high mechanic strength. The barrel sleeves preferably are interlocked via corresponding outer and inner circumferential profiles. Such profiles may for example comprise grooves or cutouts and corresponding tongues or protrusions adapted to fit into one another. The profiles may be of continuous circumferential type, i. e. run circumferentially around the sleeves. In the alternative, the profiles may be provided discontinuously in distinct circumferential sections.

Barrel sleeves are comparatively robust and provide advantageous pivoting characteristics. In particular barrel sleeves provide comparative low jamming potential.

In a further embodiment of the lopper head, one of the cutting blades is a moving blade and a cord-to-gearwheel mechanism is provided for operating the moving blade. The cord-to-gearwheel mechanism allows operation of the moving blade from remote locations, such as for example from a distant end of the stick or handle to which the lopper head is attached to. The moving and fixed blades preferably are arranged such that in the configuration in which the blades are fully pivoted towards the connector section, the fixed blade is arranged between connector section and moving blade.

A cord-to-gearwheel mechanism shall in particular mean a type of mechanic drive adapted to rotate the moving blade, wherein a movement of the cord is translated into a rotating movement. Here, a cord to be operated, i. e. pushed, by a user may be fixed to a wheel or pinion, wherein pulling the cord will result in a rotating movement of the wheel or pinion. The rotating movement of the wheel or pinion then may be translated via a gear drive into a rotating movement of the moving blade. The gear drive in particular can be adapted to obtain a gear transmission ratio adequate to generate sufficient torsion moments, i. e. cutting force, at the cutting blades.

In one further embodiment, the lopper head additionally comprises a thumb wheel adapted and designed for adjusting a pivotal torque of the pivot bearing The term pivotal torque in particular shall relate to the force needed to pivot the first and second bearing element against each other.

The thumb wheel may comprise a mechanism, in particular a spring loaded mechanism, acting on at least one of the first and second bearing element, and generating a frictional force or momentum in dependence on the setting of the thumb wheel.

In a preferred embodiment, already indicated further above, the pivot bearing and arrangement of cutting blades is such that the cutting blades generally can be rotated in a full circle revolution without a cutting blade striking the connector section and/or stick attached to the connector section. Here, it may beneficial if the cutting gap is slanted vis-à-vis the pivoting plane, and preferably project from the same side of pivoting plane as the connector section does. Additional reference is made to the description above. The present embodiment in particular leads to a favorable scope of operation.

In one embodiment, in particular in an embodiment in which a full circle rotation in general is possible, it may be advantageous to provide a pivoting stop. The pivoting stop may be adapted to limit the scope of rotation of the pivot bearing to about 360°. The expression about 360° shall mean that rotation is possible over an angle slightly smaller than 360°, in more detail an angle of 360° reduced by the rotational angle blocked by the rotational stop. In order to obtain comparatively large pivoting angles, the width of the pivoting stop in pivoting direction shall be selected as low as possible. However, sufficient mechanical strength of the pivoting stop shall be ensured.

The pivoting stop may be implemented in different geometries. In particular, the pivoting stop may be designed in form of a pin. Also, the pivoting stop may be designed as a blade or fin. The pivoting stop, in particular pin, blade or fin may be positioned and attached to project in a direction perpendicular to the center axis of the connector section. The pivoting stop may be fixed and attached to the connector section and/or a stick connected to the connector section.

As can be seen, the proposed lopper head in particular allows easy and alleviated remote operation and mechanical handling.

According to claim 9, a lopper is provided which comprises a lopper head according to any of the above described and identified embodiments and configurations. The lopper head is coupled to a lopper stick, an elongated handle for example, at the connector section of the lopper head.

As to advantages and advantageous effects, as well as with respect to possible embodiments, reference is made to the description above in connection with the lopper head as such.

In an embodiment of the lopper, a pivoting stop is provided, which preferably is attached to the lopper stick. The pivoting stop preferably comprises a projection oriented in radial direction relative to an axial direction of the connector section and/or lopper stick. The pivoting stop may be adapted and positioned such that one of the blades, preferably the fixed blade, strikes against it in respective final pivotal positions. The projection may be of any geometry and shape, in particular in the shape of a pin, lamellae or blade. The projection shall be designed and adapted to have sufficient overlap with a respective blade and sufficient mechanical strength to effectively block rotation of the cutting blades beyond the pivoting stop.

Preferably, the pivoting stop is removably attached to the lopper stick, or in the alternative the lopper head. The pivoting stop may be in one configuration be adapted to be snap connected to the lopper stick. In this case, the pivoting stop may comprise snap elements, establishing a c-shaped geometry for example, which are adapted to at least partially wrap around the stick when connected thereto. Alternatively, the pivoting stop may comprise a sleeve having an inner geometry, in particular diameter, which is adapted to the outer geometry, in particular diameter, of the stick. The sleeve may be adapted to be pushed onto the stick in axial direction. The sleeve may further be adapted to be slide along the stick, so as to allow to bring the sleeve out of its stopping position so that the none of the blades does strike against it.

In a further embodiment of the lopper, the pivot bearing and cutting blades are implemented such that the cutting blades can be oriented parallel and at least essentially antiparallel to the lopper stick and/or connector section. In the first, parallel configuration, the cutting gap between the cutting blades is oriented away from the lopper stick, whereas in the second, antiparallel configuration, the cutting gap, in more details the cutting blades are oriented towards the lopper stick.

In the first configuration, placing a branch of a tree, for example, into the cutting gap requires a pushing operation, i. e. a movement of the lopper head directed away from the user. In the second configuration, introducing a branch into the cutting gap requires a pulling operation, i. e. a movement of the lopper head towards the user. By the way, moving the cutting blades from the first configuration to the second configuration requires a pivoting movement of about 180 degrees. Both configurations, in particular the second configuration, may be advantageous for cutting branches at remote locations.

Selected embodiments of the invention will now be described in connection with the annexed figures, in which:
- Fig. 1: shows a side view of a lopper head in a first configuration;
- Fig. 2: shows the lopper head of Fig. 1 in a broken up view;
- Fig. 3: shows the lopper head in a second configuration;
- Fig. 4: shows the lopper head of Fig. 3 in a bottom view; and
- Fig. 5: shows the lopper head of Fig. 3 in a top view.

Note that elements having same or similar functions are designated with the same reference signs in different figures.

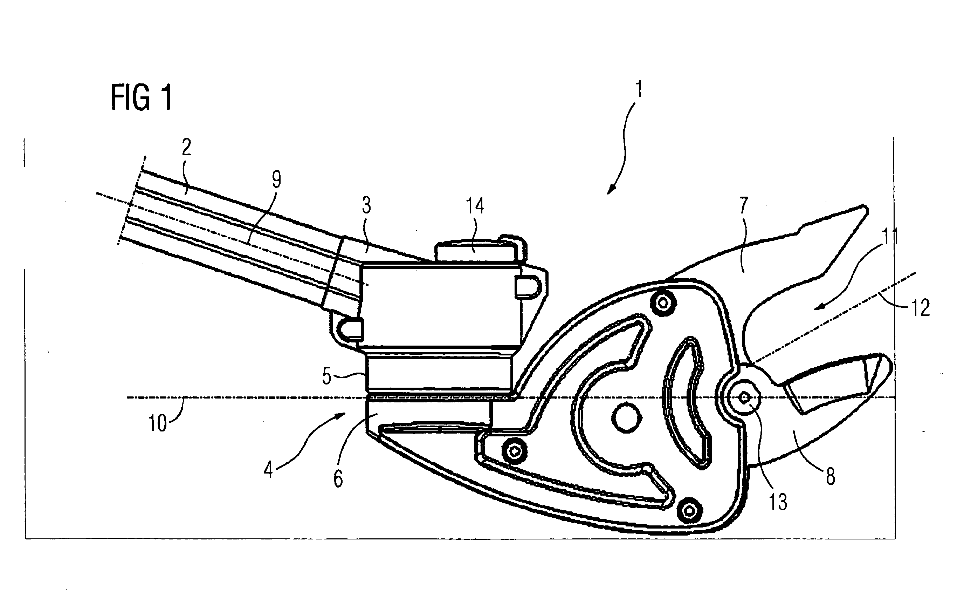

Fig. 1 shows a side view of a lopper head 1 in a first configuration. In the figures, at least a section of a stick 2 or handle to which the lopper head in general is attached to during operation is shown for the sake of completeness. It shall however be noted, that the stick 2 is not a part of the lopper head 1 as such.

The lopper head 1 comprises a connector section 3 which is adapted and provided for connecting the stick 2. The stick 2 may be a telescopic stick 2 extendable in length up to several meters. However, the stick 2 may also be a fixed stick.

The connector section 3 may be adapted such that a terminal end of the stick 2 can be introduced into the connector section 3. For this reason, the connector section 3 and stick 2 have mating cross sections, in particular of circular, oval or rectangular shape, of rectangular shape with rounded edges or any other appropriate shape. In any case, the connector section 3 and stick 2 shall be adapted such that twisting the lopper head around the stick 2 can be prevented.

The lopper head 1 further comprises a pivot bearing 4. The pivot bearing comprises a first bearing element 5 attached to or implemented in a one-piece part configuration with the connector section 3. The first bearing element 5 and connector section 3 may, in respective one-piece configurations, comprise two half-shells to be coupled together. For coupling the half shells together snap elements, screws, rivets and the like may be used. Respective parts of the pivot bearing 4 may for example be made from a plastic material and manufactured by using injection molding.

The lopper head 1 further comprises a second bearing element 6 pivotably attached to the first bearing element 5 and carrying two cutting blades of the lopper head 1. As will be described in more detail below the cutting blades are scissor type cutting blades, wherein one of the cutting blades is a fixed blade 7 and the other cutting blade is a moving blade 8. Similar to the first bearing element 5, the second bearing element 6 may comprise several component parts, in particular half-shells, to be connected together in particular as set out beforehand.

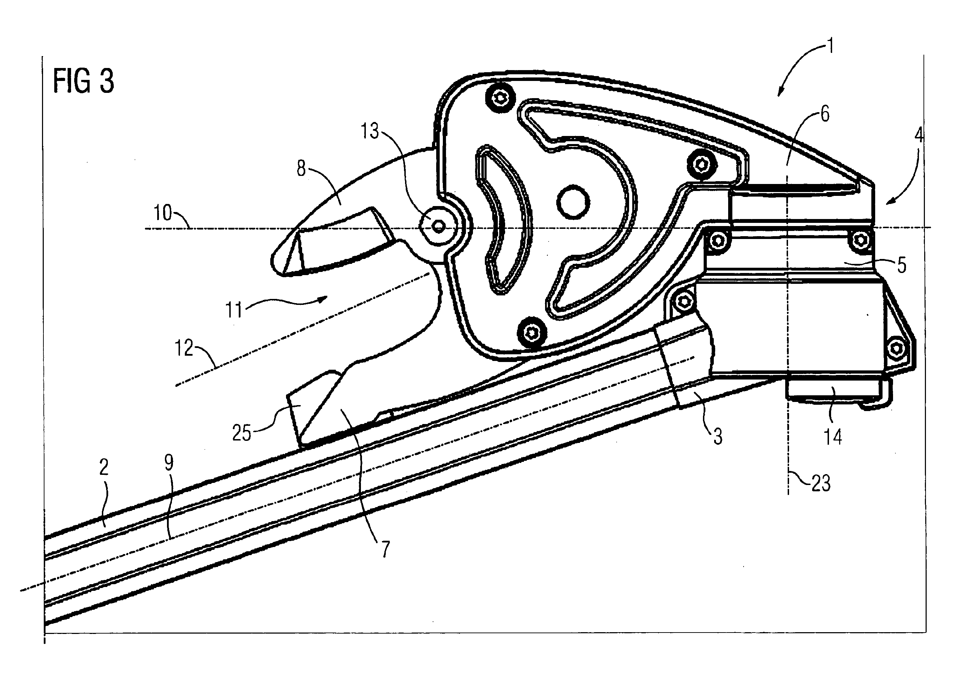

As can in particular be seen from Fig. 1, the pivot bearing 4 is cranked vis-à-vis a first center line 9 defined by the connector section 3. This in particular means that the axial direction of the connector section 3 is slanted to the pivoting plane, schematically indicated by reference sign 10 and in Fig. 3 running in horizontal direction. Providing a cranked pivot bearing 4 may result in advantageous operational alignments of the lopper head 1.

A cutting gap 11 is established between the fixed blade 7 and movable blade 8 in the opened configuration as shown in Fig. 1. The cutting gap 11 together with the fixed blade 7 and moving blade 8 define a second center line 12 of the cutting gap 11. As is obvious from Fig. 1, the second center line 12 is slanted to the pivoting plane 10, which means that the cutting gap 11 is slanted to the pivoting plane 10.

In the present case both the first center line 9 and the second center line 12 run away from the same side of the pivoting plane 10. Taking the pivoting plane 10, the fist center line 9 and the second center line 12 as far as defined by connector section 3 and cutting gap 11, respectively, a type of U- or V-shaped arrangement of the lopper head elements, i. e. connector section 3, pivot bearing 4 and blades, is obtained. Such an arrangement and alignment may result in favorable operational settings positions of the lopper head 1 relative to a stick 2 attached thereto.

As becomes obvious from Fig. 1, cutting blades fixtures and further elements such as cutting blade manipulating elements and the like, except a hinge pin 13 by which the moving blade 8 is attached to the fixed blade 7 and the blades as such, are all accommodated in a type of housing. The housing is established by component parts, in particular side shells, of the second bearing element 6. Such a housing acts as a type of fairing which can prevent unintentional entanglement between lopper head 1 and branches or shrubbery and the like.

Sections of the housing in the present case make up in respective one-piece configurations component parts of the second bearing element 6. The component parts are implemented as half shells that can be fixed to each other after fitting all components, in particular cutting blades and inner components. The housing may be made from plastic materials, in particular using injection mold technology.

The lopper head 1 further comprises a thumb wheel 14 which is adapted and designed for adjusting a pivotal torque of the pivot bearing 4. In more detail, by operating the thumb wheel 14 the force needed to rotate the first bearing element 5 against the second bearing element 6 can be adjusted.

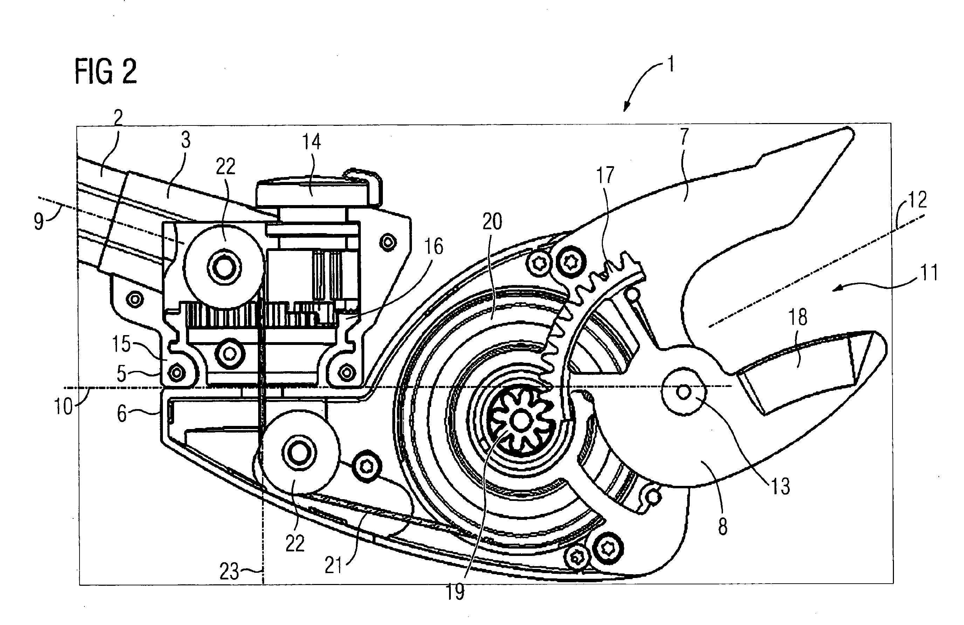

Fig. 2 shows the lopper head 1 of Fig. 1 in a broken up view. As can be seen from Fig. 2, the pivot bearing 4 comprises two mutually meshing, in particular hollow, barrel sleeves, wherein a fist barrel sleeve 15 belongs to the first bearing element 5 and a second barrel sleeve 16 belongs to the second bearing element 6. In the present case, the first barrel sleeve 15 is positioned inside the second barrel sleeve 16. This means that the first barrel sleeve 15 is an inner bearing shell, and the second barrel sleeve 16 is an outer bearing shell.

The first barrel sleeve 15 and second barrel sleeve 16 are mutually interlocked via corresponding circumferential profiles. The profiles in the present situation respectively comprise mating recesses and protrusions. By the profiles, the first 5 and second bearing element 6 can be firmly attached to each other while ensuring advantageous and robust pivoting movement, in particular without jamming.

From Fig. 2 diverse cutting blade manipulating elements can be seen. The cutting head as shown in Fig. 2 is equipped with a cord-to-gearwheel mechanism for operating, i. e. moving, in more detail rotating the moving blade 8.

The moving blade 8 is rotatably secured to the fixed blade 7 by the hinge pin 13. The moving blade 8 comprises an annular gear 17 positioned on a side averted from a cutting edge 18 of the moving blade 8. The annular gear 17 is coupled and engages a gearwheel 19 which in turn is mechanically coupled to a type of pulley 20. Pulley 20 and gearwheel 19 are rotatably mounted within the housing, in the present case to a half shell of the housing.

A cord 21 is fixed to and at least partially wrapped around a section of the pulley 20. Two additional guide pulleys 22 are provided to adequately deflect the cord 21 from the pulley 20 towards the connector section 3. The guide pulleys 22 are arranged such that the cord 21 is guided within the barrel sleeves, i. e. within the pivot bearing 4, in line with the pivot axis 23 of the pivot bearing 4. In this way it can in particular be ensured that the cord 21 will not unthread the guide pulleys 22 when the pivot bearing 4 is pivoted. In more general terms, it is advantageous that the guide pulleys 22 are arranged and positioned such that the cord 21 passes the pivoting plane 10 in line with the pivot axis 23.

Downstream the connector section 3, the cord 21 may be guided outside the stick 2 or within the stick 2 to a remote end of the stick 2, from which an operator can operate the lopper head 1. Pulling the cord 21 in a direction away from the lopper head 1 will result in a rotational movement of the pulley 20 and connected gearwheel 19, in the present case in clockwise direction. As the annular gear 17 engages the gearwheel 19, the annular gear 17 will be drawn downwards, resulting in a counterclockwise rotation of the moving blade 8. By this, the cutting gap 11 will be reduced and a cutting action can be performed.

Both Fig. 1 and Fig. 2 show the lopper head 1 in the same configuration, in which the cutting blades are oriented away from the connector section 3 or stick 2. This configuration may also be named a parallel configuration.

Due to the pivot bearing 4, the cutting blades can be rotated relative to the connector section 3 or stick. The connector section 3, pivot bearing 4 and cutting blades in the present case are adapted and designed such that the cutting blades in general can be fully rotated around the pivot axis 23. Note that this in particular is possible due to the special geometry and construction of the proposed lopper head 1. In particular it is possible to adjust a number of parameters to obtain respective pivoting characteristics. Some of these parameters are the cranking of the pivot bearing 4, the inclination or slant of the cutting gap 11 and respective cutting blades, dimensions, in particular length, of the cutting blades and the like. In a preferred embodiment the cranking of the pivot bearing 4 is chosen to be 20°, the inclination or slant of the cutting gap 11 is chosen to be 25°. To allow for a 360° rotation of the lopper head 1 the inclination angle of the outer side (the side opposite the side facing the cutting gap 11°) of the fixed counter blade 7 is chosen to be 20°. Choosing this angle approximately similar to the cranking angle of the pivot bearing 4 allows that there is hardly any gap between the fixed counter blade 7 and the stick 2 when the lopper head 1 is oriented as for example shown with Fig. 3. Note that the geometry and dimensions of the inclination of the various elements in connection with pivot bearing 4 and lopper head 1 may be selected and adapted according to respective needs, i. e. dimensions of the lopper head, in particular cutting blades, required mechanical strength and others.

Fig. 3 shows the lopper head 1 in a second configuration, in which the cutting blades are oriented towards and positioned at the connector section 3 or stick 2, which configuration may also be named an antiparallel configuration. Note that the lopper head 1 in Fig. 3 is shown in an upside down orientation as compared to Fig. 1 and 2. For the rest, the lopper head 1 corresponds to that of Fig. 1 and Fig. 2 except the fact that the cutting blades in Fig. 3 are in antiparallel orientation.

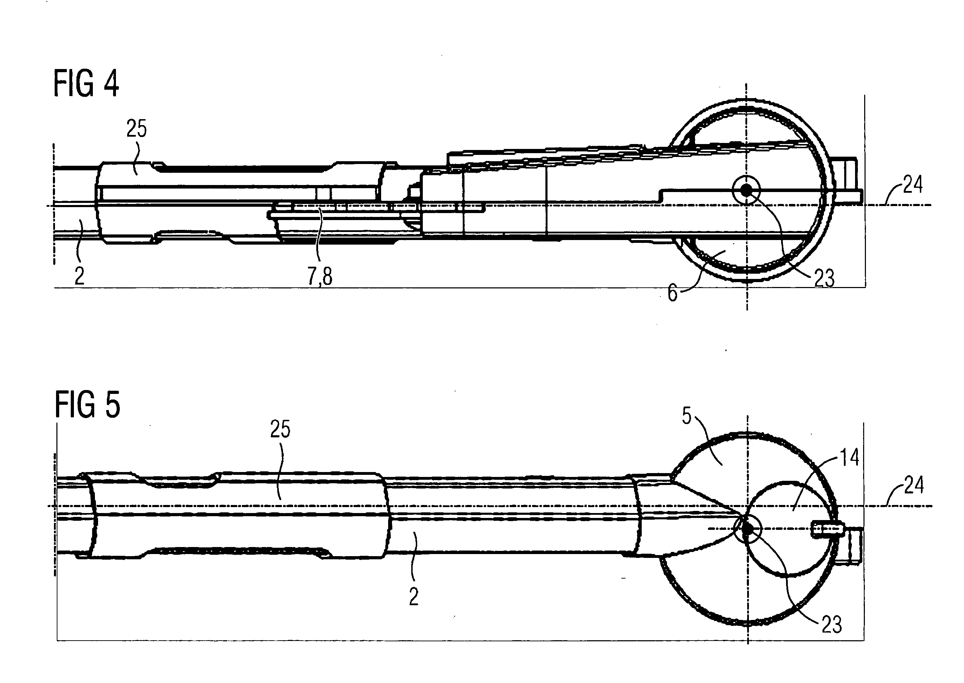

In connection with Fig. 4 and Fig. 5, respectively showing the lopper head of Fig. 3 in a bottom view and in a top view, it can be seen, that the pivot axis 23 is parallel to a cutting plane 24 of the cutting blades. Note that the cutting plane in Fig. 2 and 3 lies parallel to the drawing plane, whereas in Fig. 4 and 5, the cutting plane 24, indicated by broken lines, lies perpendicular to the drawing plane.

The pivot bearing 4 is adapted and designed such that the cutting blades in antiparallel configuration and the connector section 3 and/or stick 2 are flush with each other in an orientation parallel to the cutting plane. This can be seen best from Fig. 4, in which the cutting blades, i. e. the moving blade 8, the fixed blade 7, and connector section 3 in a direction perpendicular to the drawing plane, i. e. a direction parallel to the cutting plane 24, are arranged consecutively one behind the other. A significant advantage of this type of configuration is the fact that when using the lopper the center of gravity of the lopper head 1 is place beneath the stick 2 and thus there is no rotational force that does act on the stick 2. Thus when using the lopper head 1 in this configuration less force has to be applied to the overall lopper by the user as due to the absence of any rotational force no additional counteracting force is needed in this respect.

As can in particular be seen from Fig. 3, the pivot bearing 4 and the arrangement and geometry of the cutting blades, in particular the fixed blade 7, is such that the cutting blades generally can be rotated in a full circle revolution around the pivot axis 23. This in particular means that the cutting blades, in the present case the fixed cutting blade 7, is designed and attached so as not to hit or touch the connector section 3 or stick 2 even in the antiparallel configuration. In principle, a small gap between connector section 3 or stick 2 and fixed blade 7 remains even in the antiparallel configuration. Providing full or nearly full rotation may lead to a large range of action of the cutting head 1.

However, as the user generally operates the lopper head 1 from a distance of several meters, it may be advantageous to restrict the angle of rotation of the cutting blades, i. e. to restrict the angle of rotation of the pivot bearing 4. One possibility for restricting the angle of rotation is to provide a stop within the pivot bearing 4. One further and preferred possibility is to provide a pivoting stop 25 attached or coupled or attachable to the connector section 3 and/or stick 2.

In the Figures, the pivoting stop 25 is provided as an additional element attached and coupled to the stick 2. The pivoting stop 25 comprises a shaft or sleeve attached to the stick 2, and a projection, projecting from the shaft or sleeve and therefore from the stick 2 in radial direction. In the present case, the projection 25 has a fin like design and essentially lies in a common plane with the first center line 9.

Note that the pivoting stop 25 may have a special design to alleviate the process of putting or hooking the cutting gap 11 on a branch, in particular in a configuration in which the cutting blades are in antiparallel configuration.

In all, it can be seen, that the lopper head proposed herein allows easy and alleviated remote operation and easy mechanical handling.

### List of reference numerals

- 1: lopper head
- 2: stick
- 3: connector section
- 4: pivot bearing
- 5: first bearing element
- 6: second bearing element
- 7: fixed blade
- 8: moving blade
- 9: first center line
- 10: pivoting plane
- 11: cutting gap
- 12: second center line
- 13: hinge pin
- 14: thumb wheel
- 15: first barrel sleeve
- 16: second barrel sleeve
- 17: annular gear
- 18: cutting edge
- 19: gearwheel
- 20: pulley
- 21: cord
- 22: guide pulley
- 23: pivot axis
- 24: cutting plane
- 25: pivoting stop

## Claims

1. Lopper head (1) comprising a connector section (3) for connecting the lopper head (1) to an elongated stick (2), a pivot bearing (4) having a first bearing element (5) attached to the connector section (3) and a second bearing element (6) pivotably attached to the first bearing element (5) **characterized in that** the second bearing element (6) carries cutting blades (7, 8), wherein the pivot bearing (4) is cranked vis-à-vis a center line (9) of the connector section (3).

2. Lopper head (1) according to claim 1, wherein the cutting blades (7, 8) are scissor type cutting blades and a center line (12) of a cutting gap (11) between the cutting blades (7, 8) in the open configuration is slanted vis-à-vis a pivoting plane (10) of the pivot bearing (4).

3. Lopper head (1) according to at least one of claims 1 and 2, wherein cutting blade fixtures and cutting blade manipulating elements (19, 29, 22) are provided and accommodated in a common housing with a section thereof preferably implementing the second bearing element (6).

4. Lopper head (1) according to at least one of claims 1 to 3, wherein the bearing element (5) comprises two mutually meshing barrel sleeves (15, 16) interlocked via corresponding outer and inner circumferential profiles.

5. Lopper head (1) according to at least one of claims 1 to 4, wherein one of the cutting blades is a moving blade (8) and a cord-to-gearwheel mechanism (19, 20, 21, 22) is provided for operating the moving blade (8).

6. Lopper head (1) according to at least one of claims 1 to 5, further comprising a thumb wheel (14) implemented and designed for adjusting a pivotal torque of the pivot bearing (4).

7. Lopper head (1) according to at least one of claims 1 to 6, wherein the pivot bearing (4) and arrangement of cutting blades (7, 8) is such that the cutting blades (7, 8) generally can be rotated in a full circle revolution without a cutting blade (7) striking the connector section (3) and/or stick (2) attached to the connector section (3).

8. Lopper head (1) according to claim 7, wherein a pivoting stop (25) is provided, limiting scope of rotation of the pivot bearing (4) to about 360 °, wherein the pivoting stop (25) is provided at the connector section (3) or a stick (2) attached thereto, preferably in form of a radial protrusion.

9. Lopper comprising a lopper head (1) according to at least one of claims 1 to 8 and further a lopper stick (2) coupled to the connector section (3) of the lopper head (1).

10. Lopper according to claim 9, comprising a pivoting stop (25), preferably attached to the lopper stick (2), having a projection oriented in radial direction relative to an axial direction of the connector section (3) and/or lopper stick (2).

11. Lopper according to at least one of claims 9 and 10, wherein the pivot bearing (4) and cutting blades (7, 8) are implemented such that the cutting blades (7, 8) can be oriented parallel and at least essentially antiparallel to the lopper stick (2) and/or connector section (3).

## Patentansprüche

1. Baumschneiderkopf (1), umfassend einen Verbinderabschnitt (3) zum Verbinden des Baumschneiderkopfs (1) mit einem länglichen Stab (2), ein Schwenklager (4) mit einem ersten Lagerelement (5), das am Verbinderabschnitt (3) angebracht ist, und einem zweiten Lagerelement (6), das schwenkbar am ersten Lagerelement (5) angebracht ist, **dadurch gekennzeichnet, dass** das zweite Lagerelement (6) Schneidmesser (7, 8) trägt, wobei das Schwenklager (4) bezüglich einer Mittellinie (9) des Verbinderabschnitts gekurbelt wird.

2. Baumschneiderkopf (1) nach Anspruch 1, wobei die Schneidmesser (7, 8) scherenartige Schneidmesser sind und eine Mittellinie (12) eines Schneidspalts (11) zwischen den Schneidmessern (7, 8) in der offenen Konfiguration bezüglich einer Schwenkebene (10) des Schwenklagers (4) geneigt ist.

3. Baumschneiderkopf (1) nach mindestens einem der Ansprüche 1 und 2, wobei Schneidmesserbefestigungen und Schneidmesserbetätigungselemente (19, 29, 22) vorgesehen sind und in einem gemeinsamen Gehäuse untergebracht sind, wobei ein Abschnitt davon vorzugsweise das zweite Lagerelement (6) implementiert.

4. Baumschneiderkopf (1) nach mindestens einem der Ansprüche 1 bis 3, wobei das Lagerelement (5) zwei miteinander kämmende Tonnenhülsen (15, 16) umfasst, die über entsprechende äußere und innere Umfangsprofile miteinander verriegelt sind.

5. Baumschneiderkopf (1) nach mindestens einem der Ansprüche 1 bis 4, wobei eines der Schneidmesser ein bewegliches Messer (8) ist und ein Seil-zu-Getriebemechanismus (19, 20, 21, 22) zur Betätigung des beweglichen Messers (8) bereitgestellt ist.

6. Baumschneiderkopf (1) nach mindestens einem der Ansprüche 1 bis 5, ferner umfassend ein Daumenrad (14), das dazu implementiert und ausgelegt ist, ein Schwenkdrehmoment des Schwenklagers (4) zu verstellen.

7. Baumschneiderkopf (1) nach mindestens einem der Ansprüche 1 bis 6, wobei das Schwenklager (4) und die Anordnung aus Schneidmessern (7, 8) derart ist, dass die Schneidmesser (7, 8) im Allgemeinen in einem Vollkreis gedreht werden können, ohne dass ein Schneidmesser (7) auf den Verbinderabschnitt (3) und/oder den am Verbinderabschnitt (3) angebrachten Stab (2) auftrifft.

8. Baumschneiderkopf (1) nach Anspruch 7, wobei ein Schwenkanschlag (25) vorgesehen ist, der den Rotationsumfang des Schwenklagers (4) auf ungefähr 360° begrenzt, wobei der Schwenkanschlag (25) am Verbinderabschnitt (3) oder an einem daran angebrachten Stab (2) vorzugsweise in der Form eines radialen Vorsprungs vorgesehen ist.

9. Baumschneider, umfassend einen Baumschneiderkopf (1) nach mindestens einem der Ansprüche 1 bis 8 und ferner einen Baumschneiderstab (2), der an den Verbinderabschnitt (3) des Baumschneiderkopfs (1) gekoppelt ist.

10. Baumschneider nach Anspruch 9, umfassend einen Schwenkanschlag (25), der vorzugsweise am Baumschneiderstab (2) angebracht ist und einen Vorsprung hat, der in radialer Richtung bezüglich einer axialen Richtung des Verbinderabschnitts (3) und/oder des Baumschneiderstabs (2) ausgerichtet ist.

11. Baumschneider nach mindestens einem der Ansprüche 9 und 10, wobei das Schwenklager (4) und die Schneidmesser (7, 8) so implementiert sind, dass die Schneidmesser (7, 8) parallel und mindestens im Wesentlichen nicht parallel zum Baumschneiderstab (2) und/oder dem Verbinderabschnitt (3) ausgerichtet sein können.

## Revendications

1. Tête d'ébrancheur (1) comprenant une section de raccordement (3) servant à raccorder la tête d'ébrancheur (1) à un manche allongé (2), une crapaudine (4) comportant un premier élément de support (5) attaché à la section de raccordement (3) et un second élément de support (6) attaché à pivotement au premier élément de support (5), **caractérisée en ce que** le second élément de support (6) supporte des lames de coupe (7, 8), la crapaudine (4) étant déportée par rapport à une ligne médiane (9) de la section de raccordement (3).

2. Tête d'ébrancheur (1) selon la revendication 1, dans laquelle les lames de coupe (7, 8) sont des lames de coupe de type ciseaux et une ligne médiane (12) d'un intervalle de coupe (11) entre les lames de coupe (7, 8) dans la configuration ouverte est penchée par rapport à un plan de pivotement (10) de la crapaudine (4).

3. Tête d'ébrancheur (1) selon au moins une des revendications 1 et 2, dans laquelle des éléments de fixation de lames de coupe et des éléments de manipulation de lames de coupe (19, 29, 22) sont prévus et sont logés dans un boîtier commun dont une section constitue de préférence le second élément de support (6).

4. Tête d'ébrancheur (1) selon au moins une des revendications 1 à 3, dans laquelle l'élément de support (5) comprend deux manchons cylindriques (15, 16) à engrenage mutuel en état de verrouillage réciproque par le biais de profils circonférentiels extérieur et intérieur correspondants.

5. Tête d'ébrancheur (1) selon au moins une des revendications 1 à 4, dans laquelle l'une des lames de coupe est une lame mobile (8) et un mécanisme à cordage et roue dentée (19, 20, 21, 22) est prévu pour l'actionnement de la lame mobile (8).

6. Tête d'ébrancheur (1) selon au moins une des revendications 1 à 5, comprenant en outre une molette (14) mise en oeuvre et conçue pour ajuster un couple de pivotement de la crapaudine (4).

7. Tête d'ébrancheur (1) selon au moins une des revendications 1 à 6, dans laquelle la crapaudine (4) et l'agencement de lames de coupe (7, 8) sont tels que les lames de coupe (7, 8) peuvent généralement être tournées de façon à effectuer un cercle complet sans qu'une lame de coupe (7) ne frappe la section de raccordement (3) et/ou un manche (2) attaché à la section de raccordement (3).

8. Tête d'ébrancheur (1) selon la revendication 7, dans laquelle une butée de pivotement (25) est prévue, celle-ci limitant la plage de rotation de la crapaudine (4) à environ 360°, la butée de pivotement (25) étant prévue au niveau de la section de raccordement (3) ou d'un manche (2) attaché à celle-ci, de préférence sous la forme d'une protubérance radiale.

9. Ébrancheur comprenant une tête d'ébrancheur (1) selon au moins l'une des revendications 1 à 8, et, en outre, un manche d'ébrancheur (2) accouplé à la section de raccordement (3) de la tête d'ébrancheur (1).

10. Ébrancheur selon la revendication 9, comprenant une butée de pivotement (25), attachée de préférence au manche d'ébrancheur (2), comportant une protubérance orientée dans une direction radiale par rapport à une direction axiale de la section de raccordement (3) et/ou du manche d'ébrancheur (2).

11. Ébrancheur selon au moins une des revendications 9 et 10, dans lequel la crapaudine (4) et les lames de coupe (7, 8) sont mises en oeuvre de telle sorte que les lames de coupe (7, 8) puissent être orientées de façon parallèle et de façon au moins essentiellement antiparallèle au manche d'ébrancheur (2) et/ou à la section de raccordement (3).
